# EUROPÄISCHE PATENTANMELDUNG

(11) **EP 3 150 869 A1**
(43) Veröffentlichungstag der Anmeldung: **05.04.2017**
(21) Anmeldenummer: 15187631.5
(22) Anmeldetag: 30.09.2015
(51) Int. Cl.: F16B 33/02

(54) **BAUTEIL, VERSEHEN MIT EINEM GEWINDE**

(71) Anmelder: Siemens Aktiengesellschaft, 80333 München (DE)
(72) Erfinder: Kury, Peter, 45257 Essen (DE); Hänsel, Dirk, 14542 Werder (Havel) (DE); Lange, Marc, 50858 Köln (DE)

(57) **Zusammenfassung**

Ein Bauteil (1, 2), versehen mit einem Gewinde (4, 6), welches ein gegenüber einem Normgewinde erhöhtes Spiel (δ) in Axialrichtung aufweist, soll einerseits ein Beidrehen von Muttern auch bei stark vorgespannten Bolzen, andererseits aber auch eine hoch belastbare Schraubverbindung ermöglichen. Dazu ist das Spiel (δ) in Axialrichtung monoton steigend.

## Beschreibung

Die Erfindung betrifft ein Bauteil, versehen mit einem Gewinde, welches ein gegenüber einem Normgewinde erhöhtes Spiel in Axialrichtung aufweist. Sie betrifft weiter ein Verfahren zur Nachbearbeitung eines Normgewindes eines Bauteils, bei dem ein erhöhtes Spiel in Axialrichtung eingebracht wird.

In verschiedenen technischen Bereichen werden besonders hoch belastete Bolzen oft extern (z.B. hydraulisch) in axialer Richtung gereckt, die Muttern im gereckten Zustand formschlüssig beigedreht und die externe Vorspannkraft dann gelöst, so dass die Muttern die Belastung in Axialrichtung übernehmen. Dieses Verfahren vermeidet Torsionskräfte im Bolzen sowie Reibverschleiß in der Gewindeverbindung, was bei einer aktiv gedrehten Mutter bis zum Erreichen der gewünschten Vorspannung der Fall wäre. Bei manchen Anwendungen, z.B. Zugankern für stationäre Kraftwerks-Gasturbinen wäre ein aktives Drehen der Mutter aus den genannten Gründen sogar unmöglich.

Typische Dehnungen bei derartigem Recken in axialer Richtung liegen im Bereich von einigen Promille (relative Dehnung). Da übliche Normgewinde (hierunter werden insbesondere metrische ISO-Normgewinde [DIN 13 und DIN 14], Gewinde nach Unified Thread Standard [ANSI/ASME B1.1-2003] oder Whitworth-Gewinde verstanden) kein explizites Axialspiel aufweisen, sondern dieses sich nur durch die Toleranzfelder der Flankendurchmesser ergibt, wird dieses geringe Axialspiel bei einer Belastung und anschließender Dehnung des Bolzens häufig vollständig aufgezehrt. Dadurch kann es unmöglich werden, Normgewinde-Muttern auf stark vorgespannten Bolzen beizudrehen.

Als Lösung hierfür wird in der EP 1 527 283 B1 vorgeschlagen, die Gewindeform zu modifizieren und in Abweichung von der Normgewindeform Axial- und Radialspiel zu entkoppeln oder das Muttergewinde aufzuweiten und dabei insbesondere ein zusätzliches axiales Spiel einzubringen. Dies kann jedoch Kosten- und Kompatibilitätsprobleme nach sich ziehen, da spezielle Schneidewerkzeuge verwendet werden müssen; weiterhin wird die Gewindeüberdeckung und damit die Belastbarkeit (Abstreiffestigkeit) reduziert.

Es ist daher Aufgabe der Erfindung, ein Bauteil sowie ein Verfahren der eingangs genannten Art anzugeben, welches einerseits ein Beidrehen von Muttern auch bei stark vorgespannten Bolzen, andererseits aber auch eine hoch belastbare Schraubverbindung ermöglicht.

Diese Aufgabe wird bezüglich des Bauteils erfindungsgemäß gelöst, indem das Spiel in Axialrichtung monoton steigend ist.

Bezüglich des Verfahrens wird die Aufgabe gelöst, indem das Spiel in Axialrichtung monoton steigend eingebracht wird.

Die Erfindung geht dabei von der Überlegung aus, dass ein leichteres Beidrehen der Mutter auf einem vorgespannten Bolzen dann möglich ist, wenn das Axialspiel entsprechend der Dehnung des Bolzens in axialer Richtung zunimmt. Da hierdurch aber auch Bereiche mit geringer Erhöhung des Axialspiels verbleiben, bleibt dennoch eine hohe Stabilität der Verschraubung erhalten.

Grundsätzlich kann dabei jeder der beiden Gewindepartner, d.h. Innen- oder Außengewinde mit dem beschriebenen axial zunehmenden Axialspiel versehen werden, auch können beide Gewindepartner entsprechend nachbearbeitet werden. In besonders vorteilhafter Ausgestaltung ist jedoch das nachbearbeitete, mit einem axial zunehmenden Axialspiel nachbearbeitete Bauteil als Mutter ausgebildet, während der beim Beidrehen zu reckende Bolzen als gewöhnliches Normgewinde ausgebildet ist.

Vorteilhafterweise ist in einem ersten axialen Bereich der das axiale Spiel linear steigend bzw. im Verfahren linear steigend eingebracht. Dies ist von Vorteil, da die Verformung des Bolzens bei der Dehnung sich gleichmäßig über dessen Länge verteilt.

In einer ersten vorteilhaften Ausgestaltung erstreckt sich der erste Bereich dabei über die gesamte axiale Länge des Gewindes, d.h. der Axialversatz steigt über die gesamte axiale Länge des Gewindes linear an.

In einer zweiten vorteilhaften Ausgestaltung ist in einem zweiten axialen Bereich ein konstantes axiales Spiel eingebracht. In diesem Bereich ist im angezogenen Zustand dann eine besonders gute Belastbarkeit gegeben. Ein derartiger Bereich kann z.B. dort angeordnet sein, wo bedingt durch das auch im Normgewinde vorhandene Axialspiel auch bei gedehntem Bolzen noch kein Fressen eintreten kann. Insbesondere ist es von Vorteil, einen solchen Bereich vorzusehen, in dem überhaupt kein zusätzliches Axialspiel eingebracht wird, das zusätzliche axiale Spiel also konstant Null beträgt.

In vorteilhafter Ausgestaltung des Verfahrens wird das Spiel mit einem normgemäßen Schneidewerkzeug eingebracht. Dies vereinfacht die Nachbearbeitung erheblich.

Weiterhin wird vorteilhafterweise zusätzlich ein Spiel in Radialrichtung proportional zum Spiel in Axialrichtung eingebracht. Auch dies lässt sich mit einem normgemäßen Schneidewerkzeug einfach bewerkstelligen und erhöht die Leichtgängigkeit beim Beidrehen der Mutter.

Vorteilhafterweise wird eine oben beschriebene Mutter verwendet in einem Verfahren zum Schrauben der Mutter auf einen Bolzen, wobei der Bolzen vor dem Schrauben der Mutter mechanisch um eine vorgegebene relative Dehnung gereckt wird, und wobei das maximale eingebrachte Axialspiel dem Produkt aus relativer Dehnung und axialer Höhe des Gewindes entspricht.

Hierdurch wird gewährleistet, dass das eingebrachte Axialspiel ausreicht, um ein Beidrehen der Mutter auf dem Bolzen ohne Fressen durchführen zu können.

Vorteilhafterweise ist der Bolzen dabei Teil eines Zugankers einer Gasturbine. Insbesondere bei Gasturbinen wird nämlich der Zuganker, der die Welle des Rotors der Gasturbine fixiert, in der beschriebenen Weise gedehnt, bevor er mit einer Mutter fixiert wird.

Die mit der Erfindung erzielten Vorteile bestehen insbesondere darin, dass durch eine Nachbearbeitung eines Normgewindes mit einem axial zunehmenden Axialspiel einerseits ein einfaches Beidrehen auf einem gereckten Bolzen ermöglicht wird, und andererseits eine besonders gute Belastbarkeit der entstehenden Schraubverbindung gewährleistet bleibt.

Ausführungsbeispiele der Erfindung werden anhand von Zeichnungen näher erläutert. Darin zeigen:
- FIG 1: einen schematischen Querschnitt einer Schraubverbindung zweier Normgewinde nach dem Stand der Technik,
- FIG 2: die maximal mögliche Dehnung des Bolzens der Schraubverbindung nach dem Stand der Technik,
- FIG 3: die maximal mögliche Dehnung des Bolzens einer Schraubverbindung mit in axialer Richtung zunehmendem Axialspiel beim Gewinde der Mutter,
- FIG 4: eine Verdeutlichung der linear zunehmenden axialen Nachbearbeitung des Beispiels der FIG 3,
- FIG 5: eine Verdeutlichung der linear zunehmenden axialen Nachbearbeitung beider Gewindepartner in einem schematischen Längsschnitt einer Schraubverbindung,
- FIG 6: einen schematischen Längsschnitt durch eine Schraubverbindung mit einer proportionalen axialen und radialen Nachbearbeitung der Mutter,
- FIG 7: einen schematischen Längsschnitt durch eine Schraubverbindung mit einer proportionalen axialen und radialen Nachbearbeitung beider Gewindepartner,
- FIG 8: einen schematischen Längsschnitt durch ein Gewinde mit Verdeutlichung der in den in folgenden Abbildungen dargestellten Graphen verwendeten Variablen,
- FIG 9-13: Graphen des axialen Spiels aufgetragen gegen die Axialposition für verschiedene Ausführungsbeispiele, und
- FIG 14: einen Graphen der Belastung/Belastbarkeit des Gewindes gegen die Axialposition.

Gleiche Teile sind in allen Figuren mit denselben Bezugszeichen versehen.

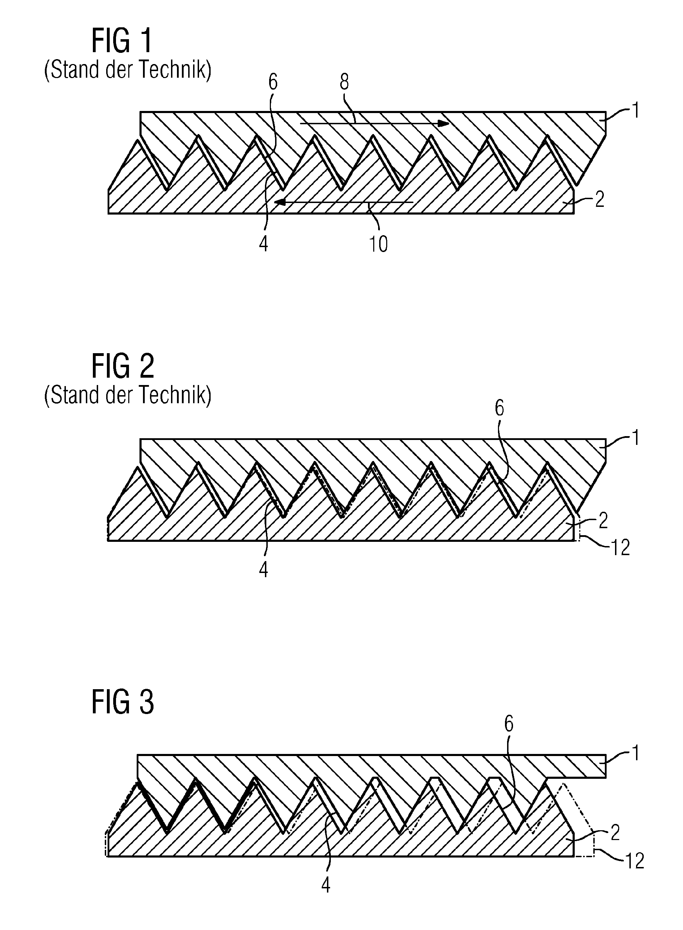

FIG 1 zeigt einen schematischen Teillängsschnitt durch den oberen Teil einer Schraubverbindung. Gezeigt sind die Profile beider Gewindepartner, nämlich einer Mutter 1 und eines Bolzens 2. Das Gewinde 4 der Mutter 1 und das Gewinde 6 sind normgemäß ausgeführt, d.h. als metrisches ISO-Normgewinde (DIN 13 und DIN 14), als Gewinde nach Unified Thread Standard (ANSI/ASME B1.1-2003) oder als Whitworth-Gewinde. In jedem Fall ist bei derartigen Gewinden 4, 6 kein explizites Axialspiel Δxmin vorgesehen. Vielmehr ist das Axialspiel Δxmin lediglich durch die herstellungsbedingten Toleranzfelder der Flankendurchmesser gegeben. Die Pfeile 8, 10 zeigen die Belastungsrichtungen von Mutter 1 bzw. Bolzen 2.

Die hier beschriebenen Muttern 1 und Bolzen 2 sind für eine besonders hohe Belastung vorgesehen. In Ausführungsbeispielen kann der Bolzen 2 z.B. koaxial zur Welle einer nicht näher gezeigten Gasturbine an deren Ende angeordnet sein und in Form eines Zugankers die Welle und die Turbinenräder fixieren. Hierzu wird der Bolzen 2 zunächst extern, z.B. hydraulisch gereckt, die Mutter 1 sodann im gereckten Zustand formschlüssig beigedreht, und anschließend die Vorspannkraft gelöst, so dass die Mutter 1 die Belastung übernimmt.

FIG 2 zeigt die Schraubverbindung aus FIG 1, jedoch zusätzlich eine Gitterdarstellung 12 des Bolzens 2 in gerecktem Zustand. Die Gitterdarstellung 12 zeigt die maximal mögliche Dehnung des Bolzens 2, so dass die Mutter 1 mit dem vorhandenen Axialspiel Δxmin noch drehbar bleibt. Stärkere Dehnungen würden dazu führen, dass sich die Mutter 1 nicht mehr aktiv drehen ließe oder es zum Fressen kommen würde.

Die FIG 3 zeigt nun die Schraubverbindung aus FIG 1 und 2, die jedoch nachbearbeitet wurde. Mit einem Normgewinde-Schneidwerkzeug wurde in das Gewinde 4 der Mutter 1 hierbei ein zusätzliches axiales Spiel eingebracht. Das axiale Spiel nimmt dabei in der FIG 3 von links nach rechts zu, d.h. das Schneidwerkzeug wurde bei der Nachbearbeitung kontinuierlich immer weiter in axialer Richtung nach rechts aus der Normposition bewegt. Dadurch vergrößert sich das Axialspiel monoton steigend im Gewinde 4 der Mutter 1. Da der Flankenwinkel aufgrund der Verwendung des Normgewinde-Schneidwerkzeugs nicht verändert wird, führt dies auch zu einem radial zunehmenden Versatz, d.h. die Höhe des Profils des Gewindes 4 reduziert sich kontinuierlich von links nach rechts.

Auch in FIG 3 ist eine Gitterdarstellung 12 des Bolzens 2 gezeigt, die die maximal mögliche Dehnung des Bolzens 2 zeigt, so dass die Mutter 1 mit dem vorhandenen Axialspiel Δxmin noch drehbar bleibt. FIG 3 zeigt deutlich, dass aufgrund der Nachbearbeitung eine deutlich stärkere Dehnung des Bolzens 2 ermöglicht wird.

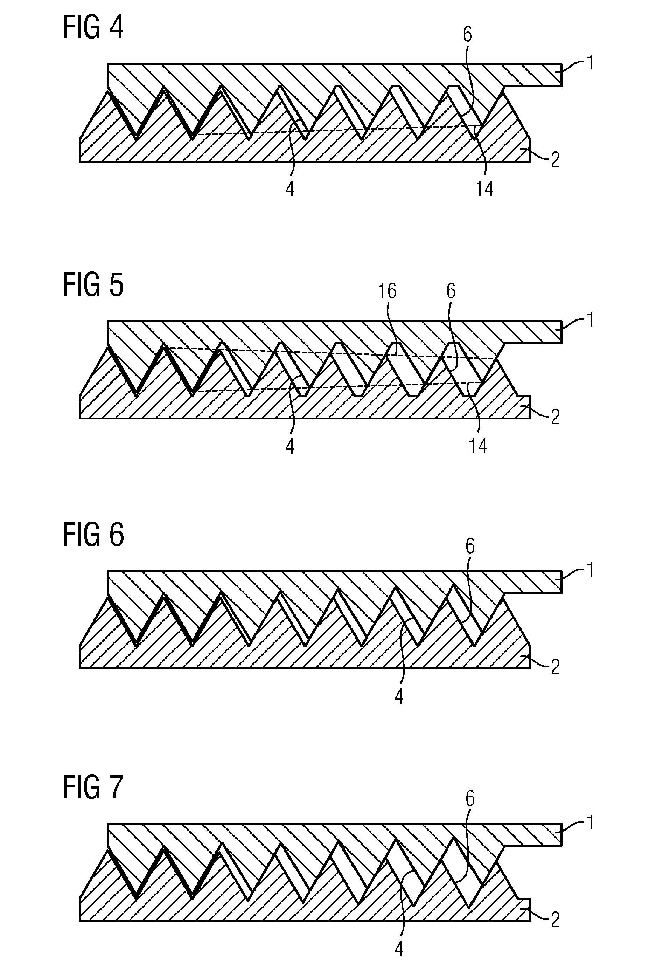

FIG 4 zeigt die Schraubverbindung aus FIG 3, jedoch sind hierbei die Spitzen des Profils des Gewindes 4 der Mutter 1 durch eine gestrichelte Linie 14 miteinander verbunden. FIG 4 zeigt, dass die ersten zwei Gewindegänge (in der Abbildung links) nicht modifiziert sind, erst danach setzt die Nachbearbeitung ein. Diese erfolgt mit linear ansteigend erhöhtem Axialspiel, was sich durch die Ausbildung der Linie 14 als Gerade zeigt.

FIG 5 zeigt eine weitere Variante, bei der beide Gewinde 4, 6 von Mutter 1 und Bolzen 2 in gleicher Weise nachbearbeitet sind. Das Gewinde 4 der Mutter 1 ist genau wie in FIG 3 und 4 dargestellt nachbearbeitet, während der Bolzen 2 ebenfalls mit dem Normgewinde-Schneidwerkzeug nachbearbeitet ist. Hierbei sind die jeweils rechten Flanken des Gewindes 6 nachbearbeitet in gleicher Weise nachbearbeitet, d.h. nach den ersten zwei Gewindegängen mit linear ansteigendem Axialspiel, dargestellt durch die Linie 14.

FIG 6 und FIG 7 zeigen Varianten der Ausführungsbeispiele aus FIG 4 bzw. FIG 5. Im Unterschied zu den letztgenannten Ausführungsbeispielen ist das Schneidwerkzeug hierbei nicht nur axial, sondern auch axial in das Profil des Gewindes 4 der Mutter 1 (FIG 6) bzw. in die Profile beider Gewinde 4, 6 verschoben worden. Hierdurch wird in gleichem Maße, d.h. proportional zum eingebrachten axialen Spiel, auch ein radiales Spiel in die jeweiligen Gewinde 4, 6 eingebracht.

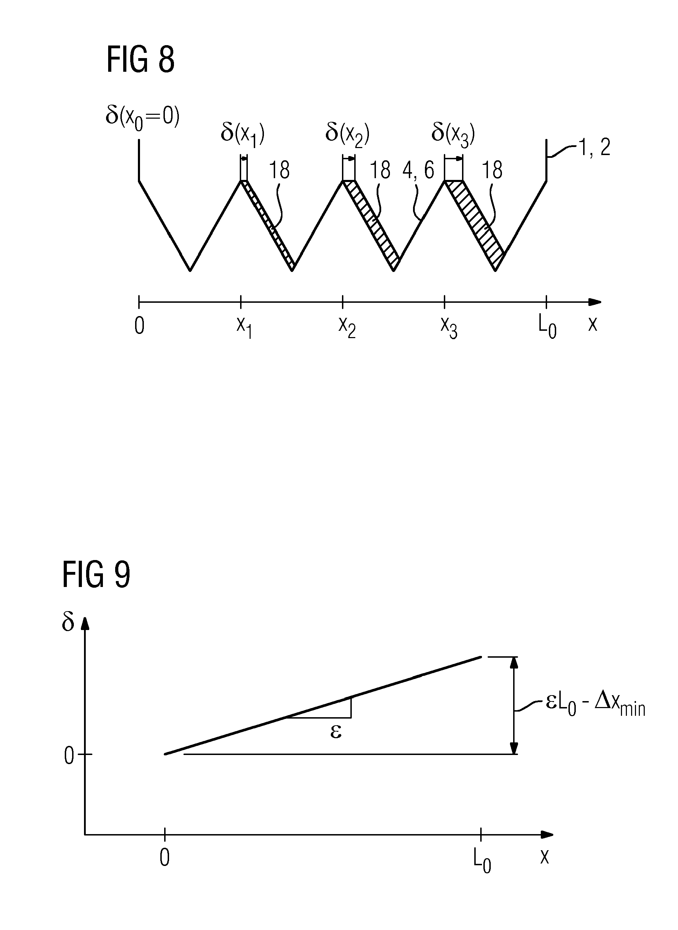

Anhand der folgenden FIG 8-13 werden verschiedene mögliche Verläufe des eingebrachten zusätzlichen Spiels erläutert. Diese sind in verschiedenen Ausführungsformen mit allen bisher erläuterten Nachbearbeitungsmöglichkeiten kombinierbar, d.h. Nachbearbeitung beider oder nur eines Gewindes 4, 6, oder ausschließlich axialer oder kombiniert axialer/radialer Spielerhöhung.

FIG 8 erläutert die in den Graphen der FIG 9-13 verwendeten Variablen. FIG 8 zeigt im oberen Bereich das Gewinde 4, 6 von Mutter 1 oder Bolzen 2, je nach Ausführungsbeispiel, sowie im unteren Bereich eine Abszisse eines Graphen, die die Axialposition x anzeigt. Der Ursprung liegt dabei am axialen Beginn des Gewindes 4, 6, die axiale Höhe des Gewindes 4, 6 wird mit L0 bezeichnet. Auf der Abszisse sind die periodischen Axialpositionen der Einschnitte zwischen Gewindeflanken mit x1, x2, x3... bezeichnet.

Der Axialversatz, d.h. das zusätzliche axiale Spiel (in anderen Ausführungsbeispielen wie zu FIG 6 und 7 erläutert auch das zusätzliche radiale Spiel) je nach Axialposition x wird mit δ(x) bezeichnet. Die FIG 8 zeigt dies beispielhaft für einen in etwa linearen Verlauf des Spiels δ(x); hierbei wird ausschließlich ein zusätzliches axiales Spiel δ(x) eingebracht. Die dadurch abgetragenen Bereiche 18 der Gewindeflanken sind schraffiert dargestellt. Bei allen im Folgenden dargestellten Ausführungsbeispiele von Verläufen des Spiels δ(x) gilt als Bedingung für L0: δ(L0)-δ(0)+Δxmin ≥ L0×ε, wobei ε die relative Dehnung des Bolzens 2 bei der Montage der Mutter 1 ist, die in der Regel im Bereich von einigen Promille liegt. Hierdurch wird ein leichtes Drehen der Mutter 1 auf dem gedehnten Bolzen gewährleistet.

Die FIG 9-13 zeigen nun verschiedene Ausführungsbeispiele für Verläufe des Spiels δ(x). Diese sind jeweils in Graphen gezeigt, in denen das eingebrachte zusätzliche, von der Norm abweichende Spiel δ(x) gegen die Axialposition x aufgetragen ist. In allen Graphen gilt dabei δ(0) = 0, δ(L0)=L0×ε (oder alternativ δ(L0)=L0×ε-Δxmin). Das über die gesamte Länge L0 eingebrachte zusätzliche Spiel L0 ist also ausreichend, um die Dehnung des Bolzens 2 zu kompensieren.

Der Verlauf des Spiels δ(x) im Ausführungsbeispiel nach der FIG 9 ist zwischen den bereits genannten Extremwerten über die gesamte axiale Länge linear, d.h. er weist eine Steigung von ε auf. Dies ist der einfachste Fall der Nachbearbeitung.

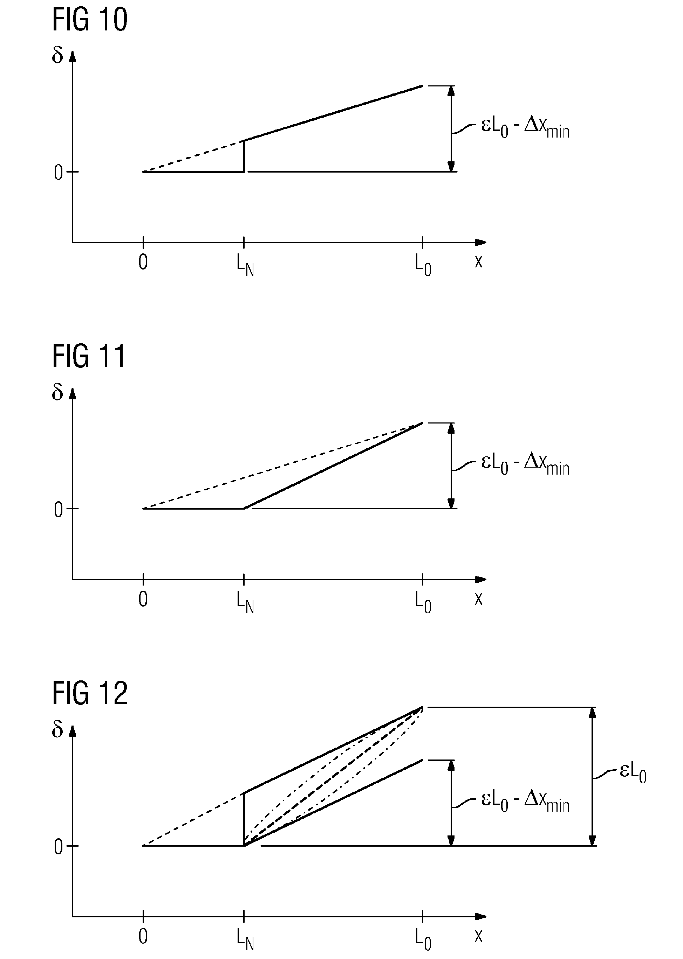

Sinnvoll ist es, im vorderen Bereich des Gewindes 4, 6 auf einer gewissen Anfangslänge LN keinen Axialversatz vorzusehen. Dies kann vorteilhaft eine Länge sein, auf der bedingt durch das auch beim Normgewinde schon vorhandene Axialspiel Δxmin auch bei gedehntem Bolzen 2 noch kein Fressen eintreten kann, d.h. es gilt LN≤Δxmin/ε. Derartige Ausführungsbeispiele sind in den FIG 10-12 gezeigt. Bei allen Ausführungsbeispielen in den FIG 10-12 ist im Bereich x≤LN daher δ(x) = 0, d.h. das Gewinde 4, 6 entspricht hier dem Normgewinde.

Je nachdem, ob Wert auf größtmögliche Belastbarkeit oder maximale Leichtgängigkeit bzw. geringe Fress-Gefahr gelegt wird, kann nach der Anfangslänge LN entweder der Axialversatz direkt auf den bei linearem Anstieg notwendigen Wert (gezeigt in FIG 10, für LN<x≤L0 gilt δ(x) = ε×x) erhöht werden, oder aber linear kontinuierlich auf den gewünschten Endwert (gezeigt in FIG 11, für LN<x≤L0 gilt δ(x)=L0×E×(x-LN)/(L0-LN)) erhöht werden.

Da auch für den Endwert δ(L0) eine Berücksichtigung des Anfangs-Axialspieles optional ist (siehe oben, δ(L0)=L0×ε oder alternativ δ(L0)=L0×ε-Δxmin), ergeben sich somit vier mögliche Gewindenachbearbeitungen für die Kombination einer linear ansteigenden Korrektur δ(x) und einer neutralen Anfangslänge LN. Die Extremfälle sind dabei die sprunghafte Änderung von δ(x) für x>LN auf die Steigung ε bis zur Länge L0, wo δ(L0)=L0×ε, und der stetige Übergang von δ(x) für x>LN auf die Steigung ε bis zur Länge L0, wo δ(L0)=L0×ε-Δxmin. Beide Verläufe des Spiels δ(x) sind in FIG 12 gezeigt. Alle Verläufe dazwischen (gestrichelt dargestellt) sind möglich, geringere Werte für das zusätzliche axiale Spiel δ(x) als die untere Grenze führen zu einem Festsitzen der Mutter und größere Werte als die durch die obere Grenze gegebenen schwächen das Gewinde strukturell mehr als notwendig.

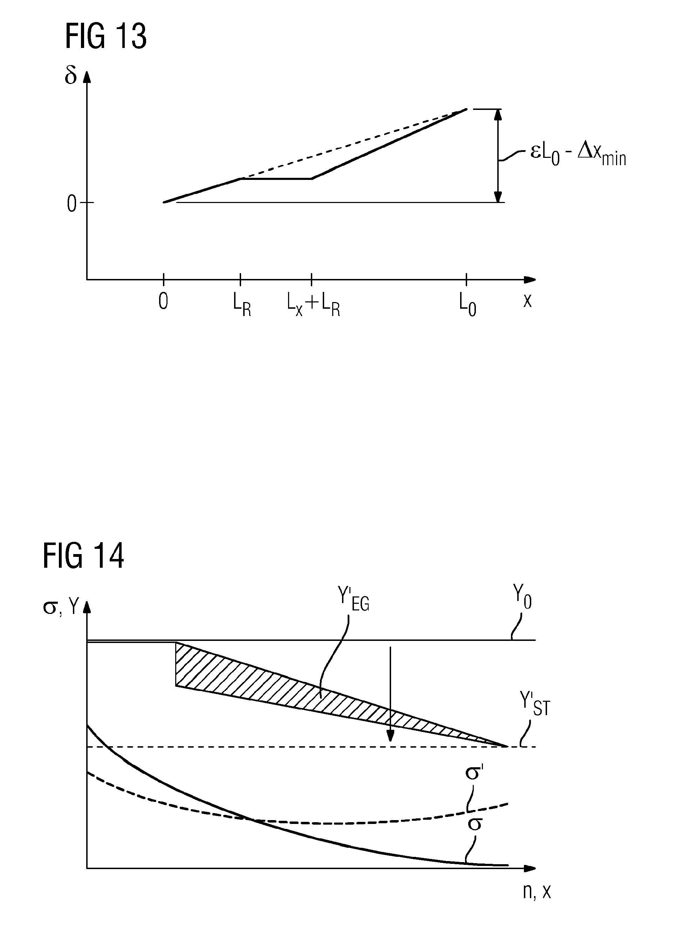

FIG 13 zeigt einen weiteren möglichen Verlauf des zusätzlichen axialen Spiels δ(x), der bei elastisch belastungsoptimierten Muttern sinnvoll sein kann. Solche Muttern sind beispielsweise die Thumsche Mutterform, die dem Fachmann aus Illgner, K.H., Blume D.: Schrauben Vademecum; Veröffentlichung von Bauer & Schaurte Karcher GmbH, 5. Auflage 1983 bekannt ist, Flexmuttern der Fa. Nord-Lock. Bei derartigen Muttern 1 kann neben der bisher beschriebenen ausschließlichen Nachbearbeitung der nicht tragenden Flanke von Mutter 1 und/oder Bolzen 2 auch eine Nachbearbeitung der Tragflanke sinnvoll sein.

Da an einer gegebenen Axialposition x nur entweder eine Modifikation der Tragflanke oder eine Modifikation der nicht tragenden Flanke erfolgt, wird in dem Graphen nach FIG 13 die Modifikation der Tragflanke mit negativen Werten von δ(x) bezeichnet. In der Ausführungsform für eine Nachbearbeitung zur Erhöhung des Axialspiels δ(x) nach FIG 13 für elastisch belastungsoptimierte Muttern 1 erfolgt im Anfangsbereich von der Länge 0 bis zur Länge LR der Mutter 1 zunächst eine Nachbearbeitung der Tragflanke (negativer Wert von δ(x)) mit der Steigung ε. In einem daran anschließenden Bereich erfolgt mit stetigem Übergang keine Nachbearbeitung für LR<x<LX+LR, d.h. δ(x)=0. Erst im Anschluss daran, für x>LX+LR erfolgt der bereits zu FIG 11 erläuterte lineare Anstieg mit stetigem Übergang bis zum gewünschten Endwert.

FIG 14 zeigt schließlich, dass die hier beschriebene Nachbearbeitung des Gewindes dessen Belastbarkeit nicht verringert. FIG 14 zeigt einen Graphen, der die typische Belastung σ(x) eines Gewindes 4, 6 entlang seiner Achse (also in Abhängigkeit der Gewindegänge n oder der Axialposition x) zeigt, vgl. Definition in Ch. J. Mech. Eng. 22(6), 869ff. (2009). Die Streckgrenze Y des Muttermaterials muss so gewählt sein, dass eine Haltbarkeit auch am Gewindebeginn (x=0) ggf. unter leichter Plastifizierung noch gegeben ist. Eine Radialaufweitung der Mutter 1 reduziert die effektive Belastbarkeit Y'ST (die Abstreiffestigkeit ist in guter Näherung proportional zur Überdeckung), so dass diese im vorderen Bereich der Mutter 1 überschritten werden kann.

Die oben beschriebene Nachbearbeitung zeigt diesen Effekt auf die effektive Belastbarkeit Y'EG nur im gering belasteten hinteren Bereich der Mutter 1. Auch für belastungsoptimierte elastische Muttern 1 (siehe oben) mit milderen Spannungsverläufen σ'(x) ist die oben beschriebene monoton steigende Nachbearbeitung immer besser als eine Brutto-Aufweitung der Mutter 1.

## Patentansprüche

1. Bauteil (1, 2),
versehen mit einem Gewinde (4, 6), welches ein gegenüber einem Normgewinde erhöhtes Spiel (δ) in Axialrichtung aufweist,
**dadurch gekennzeichnet, dass**
das Spiel (δ) in Axialrichtung monoton steigend ist.

2. Bauteil (1, 2) nach Anspruch 1,
ausgebildet als Mutter (1).

3. Bauteil (1, 2) nach einem der vorhergehenden Ansprüche,
bei dem das Spiel (δ) in einem ersten axialen Bereich linear steigend ist.

4. Bauteil (1, 2) nach Anspruch 3,
bei dem sich der erste Bereich über die gesamte axiale Länge des Gewindes (4, 6) erstreckt.

5. Bauteil (1, 2) nach Anspruch 3,
bei dem das Spiel (δ) in einem zweiten axialen Bereich konstant ist.

6. Verfahren zur Nachbearbeitung eines Normgewindes eines Bauteils(1, 2), bei dem ein erhöhtes Spiel (δ) in Axialrichtung eingebracht wird,
**dadurch gekennzeichnet, dass**
das Spiel (δ) in Axialrichtung monoton steigend eingebracht wird.

7. Verfahren nach Anspruch 6,
bei dem das Bauteil (1, 2) als Mutter (1) ausgebildet ist.

8. Verfahren nach Anspruch 6 oder 7,
bei dem das Spiel (δ) in einem ersten axialen Bereich linear steigend eingebracht wird.

9. Verfahren nach Anspruch 8,
bei dem sich der erste Bereich über die gesamte axiale Länge des Gewindes (4, 6) erstreckt.

10. Verfahren nach Anspruch 8,
bei dem das Spiel (δ) in einem zweiten axialen Bereich konstant eingebracht wird.

11. Verfahren nach einem der Ansprüche 6 bis 10,
bei dem das Spiel (δ) mit einem normgemäßen Schneidewerkzeug eingebracht wird.

12. Verfahren nach Anspruch 11,
bei dem zusätzlich ein Spiel (δ) in Radialrichtung proportional zum Spiel (δ) in Axialrichtung eingebracht wird.

13. Verfahren zum Schrauben einer Mutter (1) nach zumindest Anspruch 2,
oder einer Mutter (1), deren Gewinde (4) durch das Verfahren nach zumindest Anspruch 6 nachbearbeitet wurde,
auf einen Bolzen (2),
wobei der Bolzen (2) vor dem Schrauben der Mutter (1) mechanisch um eine vorgegebene relative Dehnung (ε) gereckt wird, und
wobei das maximale eingebrachte Axialspiel (δ(L0)) dem Produkt aus relativer Dehnung (ε) und axialer Höhe (L0) des Gewindes (4) entspricht.

14. Verfahren nach Anspruch 13,
bei dem der Bolzen (2) Teil eines Zugankers einer Gasturbine ist.
